# EUROPEAN PATENT APPLICATION

(11) **EP 4 575 620 A1**
(43) Date of publication of application: **25.06.2025**
(21) Application number: 24215696.6
(22) Date of filing: 27.11.2024
(51) Int. Cl.: G02F 1/025

(54) **ELECTRO-OPTICAL MODULATORS INTEGRATED WITH PHOTODIODES**

(30) Priority: 27.11.2023 US 202318520056
(71) Applicant: Cisco Technology, Inc., San Jose, CA 95134 (US)
(72) Inventor: CHEN, Long, Holmdel (US); CHEN, Jiayang, Holmdel (US); CHEN, Li, Holmdel (US); XU, Qianfan, San Jose (US)
(74) Representative: Noble, Nicholas

(57) **Abstract**

In one embodiment, the disclosure relates to an electro-optical device may include a modulator, a passivation layer and a photodiode assembly. The modulator may include an electro-optical material and a first silicon waveguide. The passivation layer may be disposed between the electro-optical material and the first silicon waveguide. The passivation layer defines a first side and a second side. The photodiode assembly may include a second silicon waveguide and an absorption region. The photodiode assembly is positioned relative to the first side of the passivation layer and the electro-optical material is positioned relative to the second side of the passivation layer. The photodiode assembly is in communication, such as optically or electrically, with at least one output of the modulator.

## Description

### FIELD

This disclosure relates generally to the field of photonic integrated circuits.

### BACKGROUND

Contemporary optical communications and other photonic systems make extensive use of photonic integrated circuits that are advantageously mass-produced in various configurations for various purpose.

### BRIEF DESCRIPTION OF THE FIGURES

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1A is a cross-sectional schematic diagram depicting a multi-layer device that includes a modulator and a photodiode assembly according to an exemplary embodiment of the disclosure.
Figure 1B is a cross-sectional schematic diagram depicting a multi-layer device that includes an alternative photodiode assembly according to an exemplary embodiment of the disclosure.
Figures 1C-1E are cross-sectional schematic diagrams depicting the multi-layer device that includes a modulator and a photodiode assembly, the modulator having alternative structures according to exemplary embodiments of the disclosure.
Figure 2A is a cross-sectional schematic diagram depicting a multi-layer system that includes an electro-optical device including a dielectric waveguide, and a photodiode assembly according to an exemplary embodiment of the disclosure.
Figures 2B-2G is a cross-sectional schematic diagram depicting a multi-layer device that includes a modulator including a dielectric waveguide, and a photodiode assembly, the modulator having alternative structures according to an according to an exemplary embodiment of the disclosure.
Figure 3A-3D depicts an example of the optical transition from the hybrid waveguide formed with electro-optical material and a dielectric waveguide, to the silicon waveguide through tapering of the silicon waveguide and optionally the silicon nitrate waveguide according to an exemplary embodiment of the disclosure.
Figure 4A-4C depicts embodiments wherein an electro-optical material of a multi-layer device is patterned to form waveguides according to an exemplary embodiment of the disclosure.

### DESCRIPTION OF EXAMPLE EMBODIMENTS

### OVERVIEW

In part, the disclosure relates to an electro-optical device. The electro-optical device may include a modulator, a passivation layer and a photodiode assembly. The modulator may include an electro-optical material and a first silicon waveguide. The passivation layer may be disposed between the electro-optical material and the first silicon waveguide. The passivation layer comprises a first side and a second side. The photodiode assembly may include a second silicon waveguide and an absorption region. The photodiode assembly is positioned relative to the first side of the passivation layer and the electro-optical material is positioned relative to the second side of the passivation layer. The photodiode assembly is in communication, such as optically or electrically, with at least one output of the modulator. In some embodiments, an electro-optical system may include one or more components of the electro-optical device.

### EXAMPLE EMBODIMENTS

In part, the disclosure relates to the design, creation, and/or implementation of integrating thin-film electro-optical material into semiconductor devices and structures such as, for example, silicon photonic wafers that include integrated germanium or other types of photodiodes. Various embodiments of the disclosure allow light / optical signals to be efficiently transferred between a silicon waveguide and an electro-optical material, and between a silicon waveguide and an integrated photodiode. In various embodiments, the electro-optical material and the photodiode sit on opposite sides of a silicon waveguide layer. In various embodiments, there is a small space between the electro-optical material and the silicon waveguide layer.

In various embodiments, the electro-optical material and the photodiode do not overlap on vertically opposite sides. In various embodiments, the electro-optical material may include lithium niobate (LiNbO3), lithium tantalate (LiTaO3), potassium titanyl phosphate (KTP) and β-barium borate (BBO), and barium titanate (BaTiO3 or BTO) and other materials suitable changing an optical property of the material or another material in optical communication with or in the vicinity of the electrooptical material. In various embodiments, the electro-optical material is used for modulating the phase of optical signals.

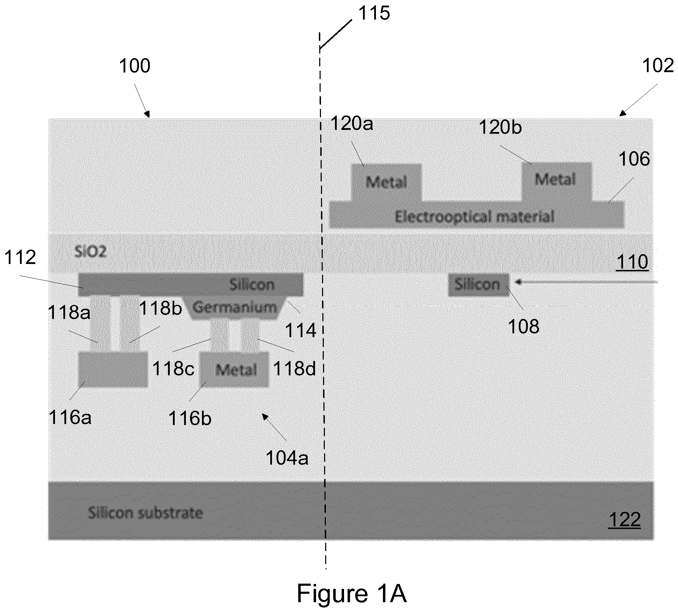

Refer now to the example embodiment of Figure 1A. Figure 1A is a cross-sectional schematic depicting a multi-layer device 100 that includes a modulator 102 and a photodiode assembly 104a. In many embodiments, the various layers, structures, regions and waveguides shown in Figure 1A may be formed using one or more silicon photonic wafers or portions thereof. The cross-sectional schematic diagram of Figure 1A shows one or more waveguides 108, 112 in which light may travel into or out of the plane of the figure and in which the waveguides may extend into and out of the plane of the figure. The waveguides 108, 112 may be formed using one or more etch steps, such as a full etch or a partial etch. The modulator 102 includes a region of electro-optical material 106 and silicon to form a waveguide 108. All of the regions disclosed herein may be elongate or otherwise patterned surfaces that extend along into or out of the plane of the page. The electro-optical material 106 and the waveguide 108 may be separated by an insulation or passivation layer 110. In various embodiments, layer 110 is the insulator side or portion of silicon-on-insulator wafer. In various embodiments, the vertical spacing between the electro-optical material 106 and the waveguide 108 is preferably less than 1 µm, and in some embodiment, less than 0.5 µm, and in some embodiment, less than 0.1 µm. This distances may be measured from the center of each structure or the closest surfaces of each such structures. In some embodiments, the waveguide 108 and the electro-optical material 106 together form two cores of a hybrid waveguide wherein the confinements of the two cores can be varied through the size of the silicon waveguide. In various embodiments, the silicon-on-insulator wafer includes an insulator side.

In various embodiments, the hybrid waveguide can transition to just the waveguide 108 without the electro-optical material 106. By adjusting the width of the silicon waveguide 108, the optical confinement of the waveguide 108 is adjusted. In various embodiments, when the waveguide 108 is adjusted to be narrow, the majority of the optical signal is confined to the electro-optical material 106. The electro-optical material 106 can then modulate the phase of the optical signals. When modulation is not necessary, the optical signal should be confined in the waveguide 108. In this case, the waveguide 108 may have a greater width. In various embodiments, the electro-optical material 106 is a relatively wide strip. In various embodiments, the width of the electro-optical material 106 is greater than 5 µm.

The photodiode assembly 104a and the electro-optical material 106 are positioned on opposite sides of the insulation or passivation layer 110. In some embodiments, such as where an electro-optical material is on the right and the photodiode assembly is on the left and axis 115 normal to a surface of the passivation layer 110 which is effectively a middle layer may be defined such that none of the structures on either the left or right side of the axis overlap with structures on the other side of the axis. A person of ordinary skill in the art will appreciate that this is only referring to the relative placement in the local environment. On an integrated photonic circuit there are likely multiple instances of such modulator and multiple instances of such photodiode assembly, and they can be freely placed without vertical overlap of one and the other. A given modulator may be an integrated electro-optical modulator in some embodiments.

In various embodiments, the photodiode assembly 104a is connected in communication with or coupled to at least one of the outputs of the modulator 102. The photodiode assembly 104a includes a silicon region 112 and an absorption region 114 made of material such as germanium. In various embodiments, the silicon region 112 is a second silicon waveguide. The absorption region 114 may be in electrical communication with electrodes 116a, 116b through conductive vias 118a 118b, 118c, 118d. In various embodiments, electrical communication includes an electrical or charge carrier conducting connection. In some embodiments, a given metal contact may be formed as a metal layer in some embodiments or a portion of such a layer.

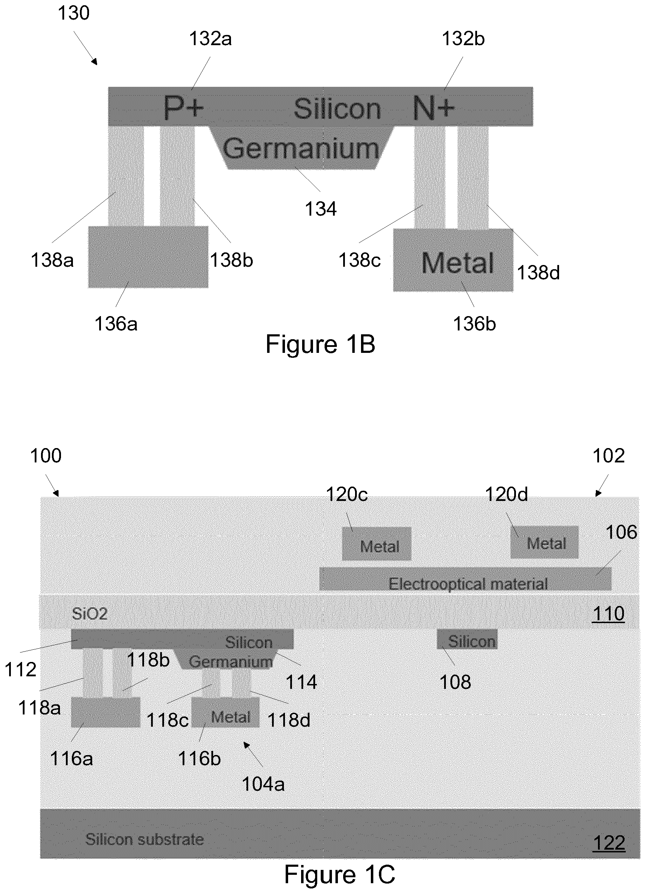

In various embodiments, the photodiode assembly 104a is configured to perform a different function than the modulator 102 such as capturing light and converting it to electrical current or other signals correlated with transmitted data received thereby. In various embodiments, the photodiode assembly 104a is part of a transmitter or a receiver. In various embodiments, the photodiode assembly 104a may collect light for feedback or control purposes with the light being coupled to the modulated light in waveguide 108. In various embodiments, additional elements may be present in the photodiode assembly 104a. For example, above the absorption region there could be another layer of silicon disposed below the absorption region 114 and the conductive vias 118c, 118d. In various embodiments, the photodiode assembly 104a is a vertical junction photodiode, but in alternative embodiments, other types of photodiode assemblies are used. Refer now to the example embodiment of Figure 1B. Figure 1B is a cross-sectional schematic of another photodiode assembly 130. The photodiode assembly 130 is a lateral junction photodiode. All of the conductive vias 138a, 138b, 138c, 138d are placed on the silicon region 132 instead of the on the absorption region 134. Conductive vias 138a, 138b make contact with a p-doped region of silicon 132a and a metal contact 136a, while conductive vias 138c, 138d are in electrical communication with an n-doped region of silicon 132b and a metal contact 136b. In various embodiments, the doping of the silicon region 132 is opposite the doping of the silicon region 112 of Figure 1A.

Refer again to the example embodiment of Figure 1A. In various embodiments, the waveguide 108 is in close proximity to the electro-optical material 106 to provide for optical confinement. In many embodiments, the waveguide 108 is a silicon waveguide. In various embodiments, the silicon waveguides are patterned silicon waveguides. In various embodiments, the silicon waveguides are patterned before the electro-optical material 106 is bonded to the silicon photonic wafer. The patterning may be used to divide one silicon layer into multiple waveguides. In various embodiments, the waveguide 108 has its width adjusted depending on its use. In various embodiments, the waveguide 108 has a cross-sectional height and width suitable to propagate light used in high-speed telecommunication applications. In various embodiments, the width of the silicon waveguide can vary from 50 nm to 0.5 µm. The thickness of the silicon waveguide can vary from 50 nm to 1.0 µm. A person of ordinary skill in the art would appreciate that since silicon has very high index of refraction, if the thickness of silicon waveguide is larger, the width of the silicon waveguide needs to be smaller to enable sufficient confinement in the electro-optical material 106. Further, engineering of the confinement factor would require precise control of the silicon waveguide dimensions and the vertical spacing between silicon and the electro-optical material. In various embodiments, it is preferable to have relatively thin silicon and thus allowing relatively wide silicon to be used for purposes of manufacturing. For example, the silicon can be about 0.22 µm thick and 0.25 µm wide.

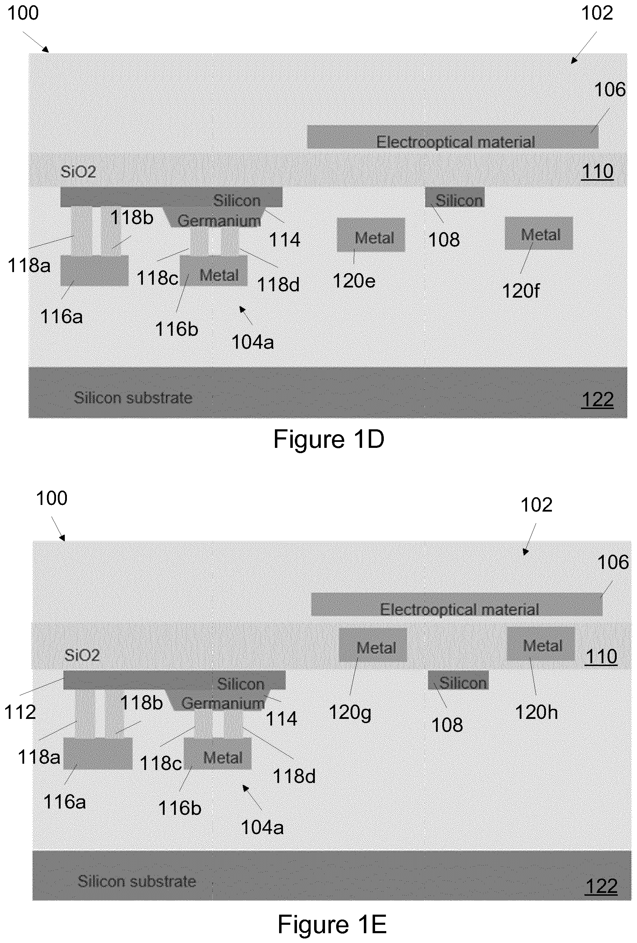

In various embodiments, electrodes 120a, 120b of the modulator 102 are positioned to be sufficiently and/or suitably spaced from the waveguide 108. The waveguide 108 may be silicon or other materials in various embodiments. In various embodiments, the electrodes 120a, 120b are resting on the electro-optical material 106. Refer now to the example embodiments of Figures 1C-1E. Figures 1C-1E are cross-sectional schematic diagrams depicting the multi-layer device that includes a modulator and a photodiode assembly, the modulator having alternative structures. In various embodiments, the metal electrodes are a pair of metal electrodes or a plurality of metal electrodes. In Figure 1C, the electrodes 120c, 120d can be placed above the electro-optical material 106, having vertical separation with the electro-optical material 106. In various embodiments, the electrodes 120c, 120d are separated from the electro-optical material 106 by a dielectric material such as silicon dioxide. In various embodiments, the vertical separation between the electrodes 120c, 120d and the electro-optical material range from about direct contact to about 2 µm. In Figure 1D, the electrodes 120e, 120f of the modulator 102 are at around the same level as the electrodes 116a, 116b of photodiode assembly 104a. In various embodiments, vertical separation between the bottom surface of the electrodes 120e, 120f and the top surface of the electro-optical material 106 between direct contact and about 2 µm. In Figure 1E, the electrodes 120g, 120h of the modulator 102 are in the passivation layer 110. A given modulator may be an electro-optical modulator in some embodiments. In some embodiments, a given metal contact or metal electrode may be formed as a metal layer in some embodiments or a portion of such a layer. Various photodiode devices may be used as part of the photodiode assembly.

In various embodiments, additional materials and structures beyond what is disclosed in Figures 1A-1E may be included. In various embodiments, optical waveguides, electrical contacts, and routings are also included. In various embodiments, the silicon waveguides have an index of refraction of approximately 3.45. In various embodiments, the electro-optical material has an index of refraction that ranges from about 2 to about 2.8. In various embodiments, the insulation or passivation layer 110 is silicon dioxide. In various embodiments, one or more or all of the structures / components are surrounded by additional regions of filler material, insulation material or passivation material. In various embodiments, the insulation or passivation layer 110 extends to surround all other components of the silicon phonic wafer. In various embodiments, the multi-layer device 100 is formed using a silicon-on-insulator wafer. In various embodiments, the multi-layer device 100 is disposed on or extends from a silicon substrate 122.

In various embodiments, the placement and spacing of the components of the modulator 102 and its relation to the photodiode assembly 104a are determined by the optimization of modulation efficiency, optical loss, ease of transition between modulator and silicon waveguide, and fabrication process capabilities.

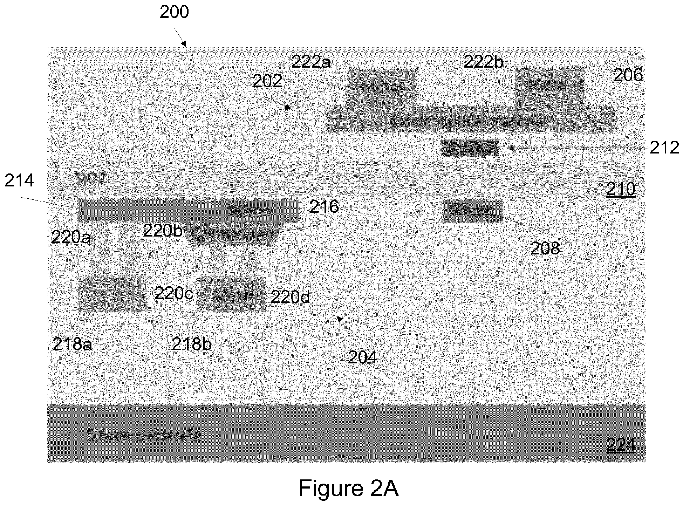

Refer now to the example embodiment of Figure 2A. Figure 2A is a cross-sectional schematic depicting a multi-layer device 200 (or system) having an electro-optical device 202 including a dielectric waveguide 212, and a photodiode assembly 204 or photodiode device. In some embodiments, the electro-optical device 202 is a modulator. The cross-sectional schematic diagram shows one or more silicon waveguides in which light may travel into or out of the plane of the figure and in which the waveguides may extend into and out of the plane of the figure. The electro-optical device 202 (or modulator) includes a region of electro-optical material 206, a silicon waveguide 208 (dielectric waveguide), a passivation layer 210 such as an insulator layer and a dielectric waveguide 212. In various embodiments, the dielectric waveguide 212 includes silicon nitride. The dielectric waveguide 212 and the electro-optical material 206 may form a hybrid waveguide for the electro-optical device 202 (or modulator). The electro-optical device 202 (or modulator) may also be referred to as an electro-optical system. In various embodiments, the electro-optical device may be part of an electro-optical system that includes some or all of the various components disclosed herein.

In various embodiments, the hybrid waveguide can be vertically coupled to the silicon waveguide 208 (dielectric waveguide). In many embodiments, the silicon waveguide 208 may be other materials and referred to more generally as a dielectric waveguide. In various embodiments, the silicon waveguide 208 can be removed for the propagation of the hybrid waveguide. Optical signals may be transferred between the silicon waveguide 208 and the hybrid waveguide or otherwise be coupled from one waveguide to the other. The width of the dielectric waveguide 212 can be adjusted to alter the optical confinement of the dielectric waveguide 212. This adjusts the proportion of the optical signal confined in the electro-optical material 206. The electro-optical material 206 can then modulate the phase of the signal.

The inclusion of the dielectric waveguide 212 may allow for greater manufacturing tolerance in engineering the hybrid waveguide. In various embodiments, the dielectric waveguide 212 has a lower index of refraction than the silicon waveguide 208. The index of refraction of the dielectric waveguide 212 permits less sensitivity in the silicon waveguide 208 (dielectric waveguide) dimensions as compared to the waveguide 108 dimensions in the waveguide of Figures 1A, 1C-1E.

In various embodiments, the photodiode assembly 204 is and the electro-optical material 206 are positioned on vertically opposite sides of the insulation or passivation layer 210. In various embodiments, the photodiode assembly 204 and the electro-optical material 206 do not vertically overlap. In various embodiments, the photodiode assembly 204 is connected to and in communication with or coupled to at least one of the outputs of the electro-optical device 202. The photodiode assembly 204 includes a silicon region 214 and an absorption region 216 made of various materials such as germanium. In various embodiments, the silicon region 214 is a second silicon waveguide. The absorption region 216 may be in electrical connection with electrodes 218a, 218b through conductive vias 220a 220b, 220c, 220d. In various embodiments, the photodiode assembly 204 is part of a transmitter or a receiver. In various embodiments, the photodiode assembly 204 is part of a modulator. In various embodiments, the photodiode assembly 204 may resemble the photodiode assembly 130 of Figure 1B.

In various embodiments, electrodes 222a, 222b of the electro-optical device 202 are positioned such that they are not in contact with the silicon waveguide 208 (dielectric waveguide). In various embodiments, the dielectric waveguide 212 is patterned from the original substrate before the bonding of the electro-optical material 206. In various embodiments, the dielectric waveguide 212 and electro-optical material 206 are fabricated together, and then both are transferred to the silicon waveguide 208 (dielectric waveguide). In various embodiments, the vertical spacing between the electro-optical material 206 and the dielectric waveguide 212 is preferably less than about 1 µm. In some embodiment, it is less than 0.5 µm. In some embodiment, it is less than about 0.1 µm. In various embodiments, the multi-layer device 200 is disposed on or extends from the silicon substrate 224.

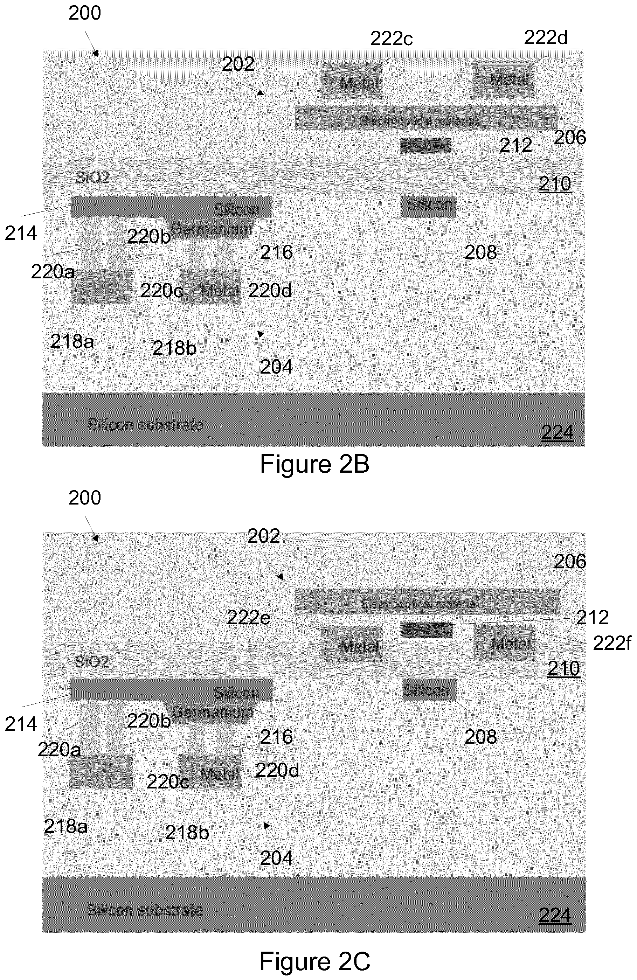

In various embodiments, the dielectric waveguide 212, the electro-optical material 206, and the electrodes 222a and 222b can be placed in different positions relative to the silicon waveguide 208 (dielectric waveguide), electro-optical material 206, and dielectric waveguide 212. In various embodiments, the metal electrodes of the modulator do not make direct contact with the electro-optical material 206. Refer now to the example embodiments of Figures 2B-2G. Figures 2B-2G are cross-sectional schematic diagrams depicting the multi-layer device that includes a modulator including a dielectric waveguide and a photodiode assembly, the modulator having alternative structures. In Figure 2B, the electrodes 222c, 222d are positioned in a layer above the electro-optical material 206, such that there is some vertical spacing. In Figure 2C, the electrodes 222e, 222f are positioned in a layer below the electro-optical material 206. In various embodiments, the electrodes 222e, 222f are positioned to be partially in the passivation layer 210.

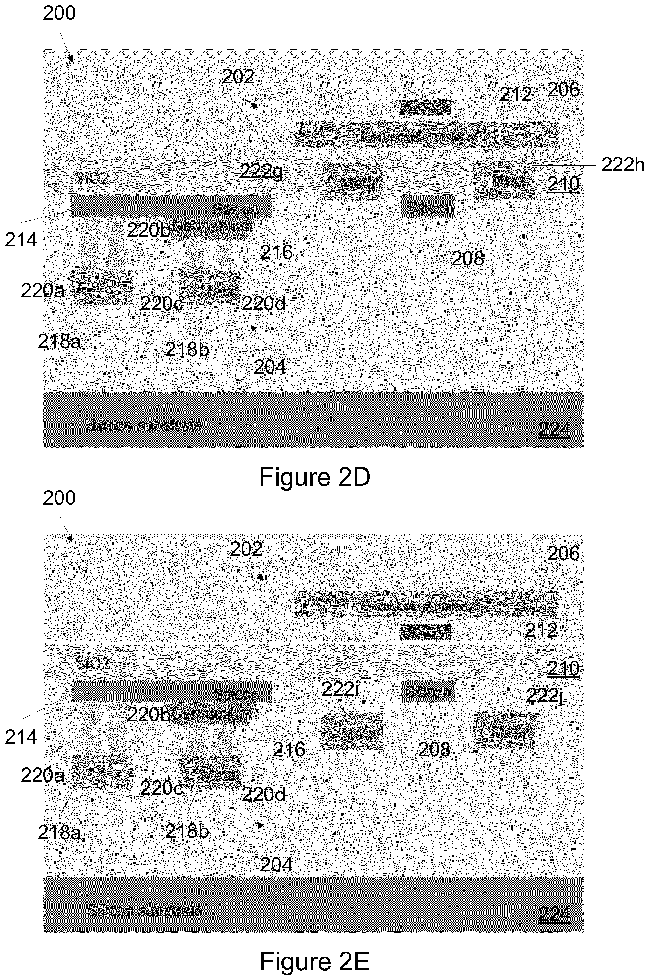

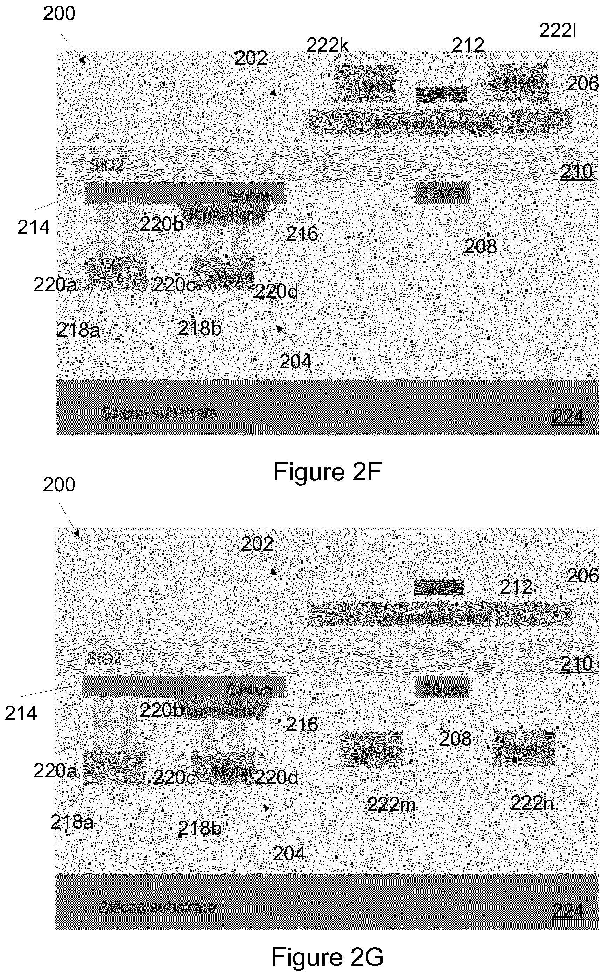

In various embodiments, the electrodes 222e, 222f are in around the same layer as the dielectric waveguide 212. In Figure 2D, the electrodes 222g, 222h are embedded in the passivation layer 210. In various embodiments, the dielectric waveguide 212 is positioned in a layer above the electro-optical material 206. In various embodiments, the electrodes 222g, 222h extend beyond the bottom of the passivation layer 210. In various embodiments, a portion of the electrodes 222g, 222h are in the same layer as the silicon waveguide 208 (dielectric waveguide). In Figure 2E, the electrodes 222i, 222j are in a layer below the silicon waveguide 208 (dielectric waveguide). In Figure 2F, the electrodes 222k, 222l are partly in the same layer as the dielectric waveguide 212 above the electro-optical material 206. In Figure 2G where the electrodes 222m, 222n are positioned in a layer lower than the silicon waveguide 208 (dielectric waveguide). Further, the dielectric waveguide 212 is positioned in the layer above the electro-optical material. A person of ordinary skill in the art would appreciate that a variety of different placements of components can be utilized. In various embodiments, the placement and spacing of components is adjusted to optimize modulation efficiency, optical loss, ease of transition between modulator and silicon waveguides, and fabrication process capabilities.

In various embodiments, a multi-layer device or one or more devices may be manufactured to fully integrate the electro-optical material with the geranium photodiode or other types of photodiodes. In various embodiments, this is structured as a silicon-on-insulator wafer. First, a temporary silicon substrate is provided. An insulation or passivation layer is implanted on the temporary silicon substrate. Then, a silicon waveguide layer is patterned through one or multiple etch steps, followed by appropriate implantation steps. In various embodiments, other processes or features such as silicon p-n diodes, p-i-n diodes, and SiN waveguides can be added. An absorption region is then grown on the silicon region / waveguide, with appropriate implantation and metal contacts to the absorption region and/or silicon.

Optionally, in some embodiments, integrating structures, layers, or other features such as SiN waveguides, metal routing layers, through-silicon vias, or other necessary components may be added through other processes such as etching, deposition, crystal growth, etc. Once these components are applied, the components are protected by insulators, a permanent silicon substrate is bonded opposite to the temporary silicon substrate. The multi-layer device may then be flipped or turned over and the temporary silicon substrate is removed, followed with appropriate processes. The flip-chip process may use various supports for supporting the wafer or other layers being modified. As a result, the silicon waveguide layer across from the electro-optical material and the silicon region / waveguide with the absorption region disposed thereon are now close to the top of the silicon phonic wafer. A thin dielectric layer can then be disposed on the passivation layer.

In some embodiments, a dielectric waveguide will be defined above the thin dielectric layer after the removal of the temporary silicon substrate, followed by a chemical-mechanical planarization step. The electro-optical material may then be added through a bonding process. In some embodiments, electro-optical material may be bonded directly above the top dielectric layer without the extra dielectric waveguide, while in other embodiments it is bonded above the dielectric waveguide. Afterwards, additional processes can be used to add metallization to provide driving electrodes for the electro-optical material and connection to the lower metal layers. Additional layers of an insulator may be added. In various embodiments, the insulation or passivation layer utilized throughout is silicon oxide. In various embodiments, the driving electrodes can be already embedded before the bonding of the electro-optical material.

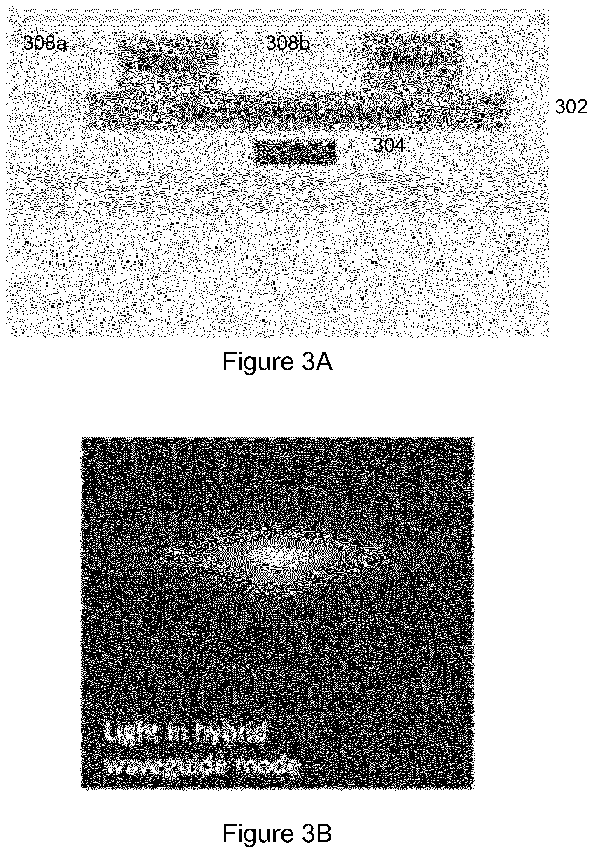

Refer now to the example embodiment of Figures 3A-3D. Figure 3A-3D illustrates the optical transition from the hybrid waveguide formed with electro-optical material 302 and a dielectric waveguide 304, to the silicon waveguide 306 through tapering of the silicon waveguide 306 and optionally the dielectric waveguide 304. In various embodiments, dielectric waveguide and the electro-optical material operate as two cores of a hybrid waveguide. The hybrid waveguide of Figure 3A includes an electro-optical material 302, a dielectric waveguide 304, and electrodes 308a, 308b for receiving electrical signals. In the hybrid waveguide of Figure 3A the entirety of the optical signal or a portion thereof may be confined to the electro-optical material 302 and the dielectric waveguide 304 to perform modulation.

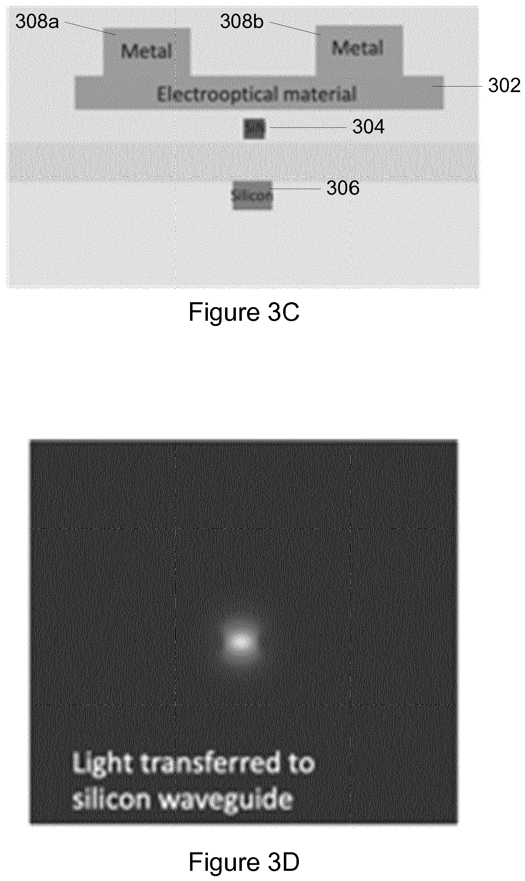

Figure 3B depicts the optical signal associated with Figure 3A where the entirety of the optical signal is substantially confined to the hybrid waveguide. Confinement of the optical signal is desirable so the hybrid waveguide can modulation the optical signal. Figure 3C depicts the same hybrid waveguide as Figure 3A, but now with a silicon waveguide 306 with a width configured to confine the optical signal. For example, the silicon waveguide 306 could be 400 nm wide and 220 nm thick. In various embodiments, dielectric waveguide and the electro-optical material operate as two cores of a hybrid waveguide. Additionally, the dielectric waveguide 304 is narrower, to reduce its optical confinement. For example, the dielectric waveguide 304 could be 300 nm wide and 250 nm thick. In some implementations, the optical signal is pulled down to the silicon waveguide 306. Figure 3D depicts the optical signal substantially confined in the silicon waveguide 306. The optical signal can be confined to the silicon waveguide 306 after the modulation has been completed or when no modulation is necessary. In various embodiments, the dielectric waveguide 304 is not included, and instead the shift is controlled exclusively through altering the width of the silicon waveguide 306.

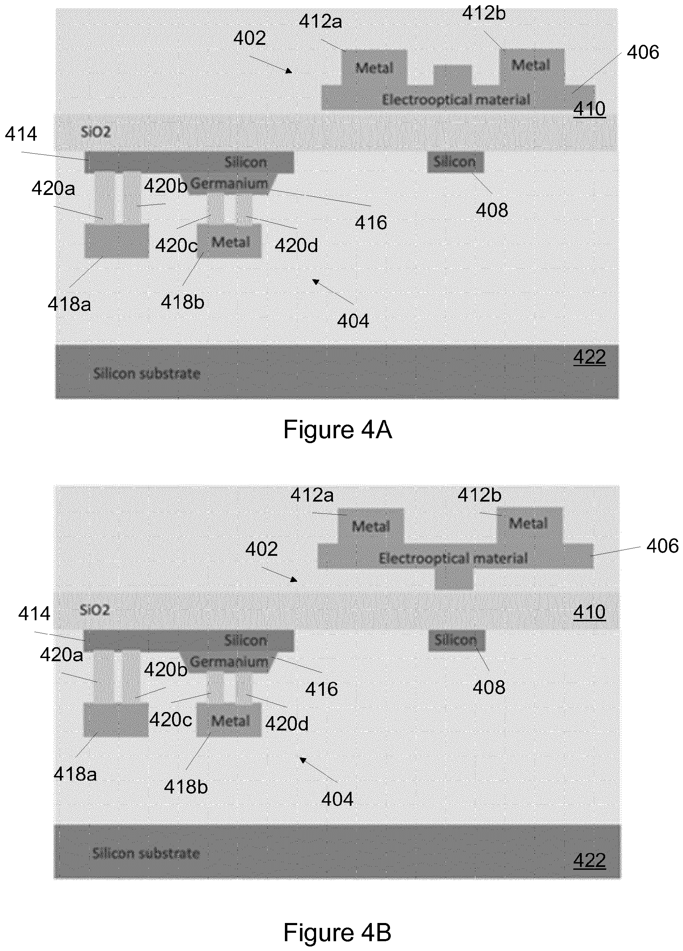

Refer now to the example embodiment of Figures 4A-4C. Figures 4A-4C depicts embodiments where the electro-optical material 406 is directly patterned to form waveguides. Figures 4A-4C include a modulator 402 and a photodiode assembly 404 on a silicon substrate 422. The modulator 402 includes electro-optical material 406, a silicon waveguide 408, an insulation or passivation layer 410 and electrodes 412a, 412b of the modulator 402 in accordance with the disclosure. The photodiode assembly 404 includes a silicon region 414, an absorption region 416 made of for example germanium, electrodes 418a, 418b, and metal conductive paths, channels, or vias 420a, 420b, 420c, 420d in accordance with the disclosure. In some embodiments, silicon region 414 may be a second silicon waveguide. Electro-optical material 406 has been patterned to form two trenches to the left and right of a raised center region or mesa.

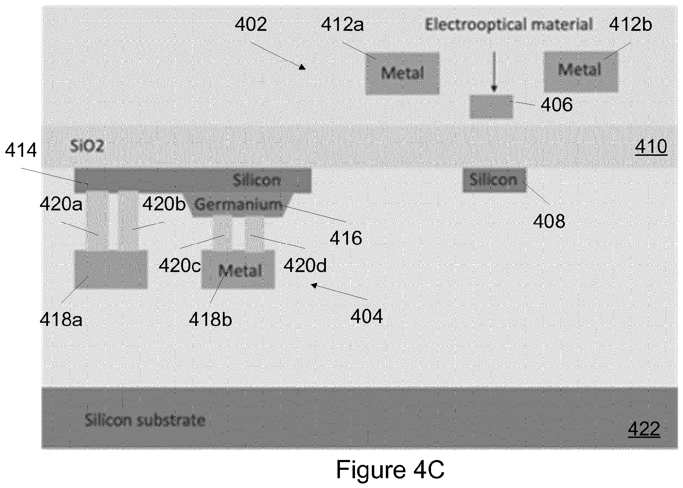

In various embodiments, additional silicon waveguides or dielectric waveguides are not needed to define the waveguide mode. In some embodiments, this may be desirable as another way to improve the manufacturing tolerances associated with the spacing of the silicon waveguide and the electro-optical material. In Figures 4A and 4B the electro-optical material 406 is patterned to form a hybrid waveguide where a narrower region of the electro-optical material performs the same function as the dielectric waveguide 212 described in Figure 2. In Figure 4C the electro-optical material 406 is patterned to have a narrow waveguide rather than requiring the wide regions as shown in Figure 4A and 4B. A person of ordinary skill in the art will appreciate that while Figures 4A and 4B show electrodes 412a and 412b above the electro-optical material 406, in various embodiments, such metal electrodes can be placed at different heights, above the electro-optical material or below the electro-optical material, or even below the silicon waveguide.

Although, the disclosure relates to different aspects and embodiments, it is understood that the different aspects and embodiments disclosed herein can be integrated, combined, or used together as a combination system, or in part, as separate components, devices, and systems, as appropriate. Thus, each embodiment disclosed herein can be incorporated in each of the aspects to varying degrees as appropriate for a given implementation. Further, the various apparatus, optical elements, electrical contacts, photodiode layers, germanium structures, silicon dioxide structures, electro-optical structures, layers and materials, passivation coatings / layers, optical paths, waveguides, splitters, couplers, combiners, electro-optical devices, inputs, outputs, ports, channels, components and parts of the foregoing disclosed herein can be used with any laser, laser-based communication system, waveguide, fiber, transmitter, transceiver, receiver, and other devices and systems without limitation.

Having thus described several aspects and embodiments of the technology of this application, it is to be appreciated that various alterations, modifications, and improvements will readily occur to those of ordinary skill in the art. Such alterations, modifications, and improvements are intended to be within the spirit and scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

Also, as described, some aspects may be embodied as one or more methods. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or," as used herein in the specification and in the claims, should be understood to mean "either or both" of the elements so conjoined, i.e., elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value.

In the claims, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of' and "consisting essentially of' shall be closed or semi-closed transitional phrases, respectively.

Where a range or list of values is provided, each intervening value between the upper and lower limits of that range or list of values is individually contemplated and is encompassed within the disclosure as if each value were specifically enumerated herein. In addition, smaller ranges between and including the upper and lower limits of a given range are contemplated and encompassed within the disclosure. The listing of exemplary values or ranges is not a disclaimer of other values or ranges between and including the upper and lower limits of a given range.

The use of headings and sections in the application is not meant to limit the disclosure; each section can apply to any aspect, embodiment, or feature of the disclosure. Only those claims which use the words "means for" are intended to be interpreted under 35 USC 112. Absent a recital of "means for" in the claims, such claims should not be construed under 35 USC 112. Limitations from the specification are not intended to be read into any claims, unless such limitations are expressly included in the claims.

Embodiments disclosed herein may be embodied as a system, method or computer program product. Accordingly, embodiments may take the form of an entirely hardware embodiment, an entirely software embodiment (including firmware, resident software, microcode, etc.) or an embodiment combining software and hardware aspects that may all generally be referred to herein as a "circuit," "module," or "system." Furthermore, embodiments may take the form of a computer program product embodied in one or more computer readable medium(s) having computer readable program code embodied thereon.

## Claims

1. An electro-optical device comprising:
a modulator comprising:
an electro-optical material, and
a first silicon waveguide,
a passivation layer disposed between the electro-optical material and the first silicon waveguide, the passivation layer comprising a first side and a second side; and
a photodiode assembly comprising:
a second silicon waveguide and
an absorption region,
wherein the photodiode assembly is positioned relative to the first side of the passivation layer and the electro-optical material is positioned relative to the second side of the passivation layer; and
wherein the photodiode assembly is in communication with at least one output of the modulator.

2. The electro-optical device of claim 1 wherein any one of more of:
A) the electro-optical material is at least about 5 µm wide;
B) the electro-optical material has an index of refraction that ranges from about 2 to about 2.8;
C) the electro-optical material is separated from the first silicon waveguide by less than about 1 µm, or more preferably, less than about 0.5 µm such that the electro-optical material and the first silicon waveguide are configured to operate as two cores of a hybrid waveguide.
D) the absorption region comprises germanium;
E) the electro-optical material comprises LiNbO3;
F) the electro-optical material comprises BaTiO3;
G) the electro-optical material is patterned or tapered to form a waveguide.

3. The electro-optical device of claim 1 or 2, wherein any one or more of:
A) the device further comprises metal electrodes sitting above the electro-optical material, with vertical separation between a bottom surface of the electrodes and a top surface of the electro-optical material between 0 and about 2 µm;
B) the device further comprises metal electrodes sitting below the electro-optical material, with vertical separation between a top surface of the electrodes and a bottom surface of the electro-optical material between 0 and about 2 µm.
C) the device further comprises a first metal electrode connected to a surface of the absorption region and a second metal electrode connected to the second silicon waveguide.

4. The electro-optical device of any preceding claim wherein the modulator further comprises:
a dielectric waveguide that is positioned between the passivation layer and the electro-optical material such that the dielectric waveguide and the electro-optical material operate as two cores of a hybrid waveguide.

5. The electro-optical device of claim 4 wherein the electro-optical material is separated from the dielectric waveguide by less than about 1.0 µm, less than about 0.5 µm or less than about 0.1 µm.

6. The electro-optical device of claim 4 or 5 wherein the dielectric waveguide is made of silicon nitride.

7. The electro-optical device of any preceding claim wherein the modulator further comprises:
a dielectric waveguide positioned above the electro-optical material and the passivation layer, such that the dielectric waveguide and the electro-optical material operate as two cores of a hybrid waveguide.

8. The electro-optical device of any of claims 4 to 7 wherein the electro-optical material is separated from the dielectric waveguide by less than about 1.0 µm, less than about 0.5 µm or less than about 0.1 µm.

9. The electro-optical device of any of claims 4 to 8 wherein the dielectric waveguide is made of silicon nitride.

10. An electro-optical system comprising:
a passivation layer;
an electro-optical device comprising:
an electro-optical material, and
a dielectric waveguide spaced less than about 1 µm from the electro-optical material
a first waveguide separated from the dielectric waveguide by a passivation layer; and
a photodiode assembly comprising
a second waveguide,
a first metal contact in electrical communication with the second waveguide,
a second metal contact in electrical communication with the second waveguide,
wherein the photodiode assembly is positioned relative to a first side of the passivation layer,
wherein the electro-optical material is positioned relative to a second side of the passivation layer, wherein the photodiode assembly is connected in communication with or coupled to at least one output of the electro-optical device.

11. The electro-optical system of claim 10 wherein any one or more of:
A) the system further comprises a modulator, wherein the modulator comprises at least one or more layers of material disposed relative to the second side of the passivation layer;
B) the electro-optical material comprises germanium;
C) the electro-optical material comprises LiNbO₃;
D) the electro-optical material comprises BaTiO_{3.}
E) the dielectric waveguide is disposed on the second side of the passivation layer;
F) a width of the dielectric waveguide can be adjusted to alter a proportion of an optical signal confined to the electro-optical material and the first waveguide;
G) the first waveguide is a silicon waveguide, wherein the second waveguide is a silicon waveguide;
H) the photodiode assembly comprises one or more portions of Germanium.

12. A method of manufacturing a modulator and photodiode device, the method comprising:
patterning a silicon layer of a silicon-on-insulator wafer to define a first silicon waveguide and a second silicon waveguide;
forming an absorption region on the first silicon waveguide,
wherein the absorption region and first silicon waveguide are in electrical communication through at least one metal contact;
flipping and supporting the silicon-on-insulator wafer such that an insulator side thereof is positioned for further processing;
bonding an electro-optical material to a region of the insulator side that is opposite the second waveguide; and
forming two or more metal electrodes on the electro-optical material.

13. The method of claim 12 wherein the electro-optical material is bonded directly above the insulator side such that it is vertically separated from the second silicon waveguide by less than 1 µm.

14. The method of claim 12 or 13 further comprising:
forming a dielectric waveguide on the insulator side, optionally wherein the electro-optical material is bonded above the dielectric waveguide, separated by a distance of less than 1 µm, preferable less than 0.5 µm.

15. A method of manufacturing a modulator and photodiode device, the method comprising:
patterning a silicon layer of a silicon-on-insulator wafer to define a first silicon waveguide and a second silicon waveguide;
forming an absorption region on the first silicon waveguide,
wherein the absorption region and first silicon waveguide are in electrical communication through at least one metal contact;
forming and patterning a metal layer to form a plurality of metal electrodes above the second silicon waveguide;
flipping and supporting the silicon-on-insulator wafer such that an insulator side thereof is positioned for further processing and the first waveguide is below the second silicon waveguide; and
bonding an electro-optical material to a region of the insulator side that is opposite the second waveguide, wherein the plurality of metal electrodes is in electrical communication with the electro-optical material.
